# EUROPÄISCHE PATENTSCHRIFT

(11) **EP 3 155 366 B1**
(45) Veröffentlichungstag und Bekanntmachung des Hinweises auf die Patenterteilung: **14.03.2018**
(21) Anmeldenummer: 15733603.3
(22) Anmeldetag: 29.05.2015
(51) Int. Cl.: G01B 21/04, B21D 5/02, G01B 21/22, G01B 5/24

(54) **KALIBRIERWERKZEUG FÜR EIN WINKELMESSWERKZEUG IN EINEM BIEGESTEMPEL UND VERFAHREN ZUM KALIBRIEREN DES WINKELMESSWERKZEUGES**
CALIBRATION TOOL FOR AN ANGLE MEASURING TOOL IN A BENDING DIE AND METHOD FOR CALIBRATING THE ANGLE MEASURING TOOL
OUTIL D'ÉTALONNAGE D'UN OUTIL DE MESURE D'ANGLE DANS UN POINÇON DE PLIAGE ET PROCÉDÉ D'ÉTALONNAGE DE L'OUTIL DE MESURE D'ANGLE

(30) Priorität: 12.06.2014 AT 504062014
(43) Veröffentlichungstag der Anmeldung: 19.04.2017
(73) Patentinhaber: TRUMPF Maschinen Austria GmbH & Co. KG., 4061 Pasching (AT)
(72) Erfinder: KEPLINGER, Walter, A-4184 Helfenberg (AT)
(74) Vertreter: Burger, Hannes
(86) Internationale Anmeldenummer: PCT/AT2015/050140
(87) Internationale Veröffentlichungsnummer: WO 2015/188213

(56) Entgegenhaltungen:
- WO-A1-00/23208
- WO-A1-94/19662
- TRUMPF: "TRUMPF Biegen: TruBend - Funktionsweise ACB Winkelsensor", YouTube , 3. Dezember 2009 (2009-12-03), XP054976116, Gefunden im Internet: URL:https://youtu.be/NX4hjwgxsa4 [gefunden am 2015-10-06]

## Beschreibung

Die Erfindung betrifft ein Kalibrierwerkzeug zum Kalibrieren eines in einen Biegestempel einer Biegemaschine, insbesondere Abkantpresse, integrierten Winkelmesswerkzeuges, sowie ein Verfahren zum Kalibrieren der Biegemaschine, wie dies in den Ansprüchen 1 und 8 angegeben ist.

Die WO 00/23208 A1 offenbart ein Winkelmesswerkzeug, welches in einen Biegestempel integriert ist.

Aus der DE 195 21 369 A1 und der EP 2 529 850 A1 sind Biegewinkelmesswerkzeuge zum Einsatz in einer Abkantpresse bekannt. Die Biegewinkelmesswerkzeuge sind in einen Biegestempel integriert, welcher an einem oberen Pressbalken angebracht ist. Die Biegewinkelmesswerkzeuge sind so ausgebildet, dass sie an der Innenseite der beiden Schenkel eines zu biegenden Bleches anliegen. Je mehr der Biegestempel das zu biegende Blech in die Matrize eindrückt, desto kleiner wird der zwischen den beiden Schenkeln des Bleches eingeschlossene Winkel. Dadurch werden die Biegewinkelmesswerkzeuge nach oben gedrückt, wodurch in der Maschinensteuerung der aktuelle Biegewinkel berechnet werden kann.

An die aus der DE 195 21 369 A1 und der EP 2 529 850 A1 bekannten Biegewinkelmesswerkzeuge müssen in periodischen Zeitabständen kalibriert werden, um den Biegewinkel richtig messen zu können.

Zu derartigen Kalibrierzwecken wird derzeit im unteren Pressbalken ein Kalibrierwerkzeug gespannt. Der obere Pressbalken mit dem Biegewinkelmesswerkzeug wird anschließend nach unten verfahren, sodass das Biegewinkelmesswerkzeug mit dem Kalibrierwerkzeug zur Anlage kommt und kalibriert werden kann. Anschließend wird obere Pressbalken wieder in seine obere Stellung zurückgefahren. Das Kalibrierwerkzeug wird anschließend aus dem unteren Pressbalken abgerüstet und anstelle des Kalibrierwerkzeuges wird ein Biegewerkzeug gerüstet.

Nachteilig an diesem Kalibriervorgang ist, dass der untere Pressbalken für jeden Kalibriervorgang neu gerüstet werden muss. Dieses Vorgehen ist aufgrund des Rüstvorganges beson ders zeitaufwendig. Gerade wenn in einem Biegeprozess verschiedene Biegewerkzeuge verwendet werden müssen kann der Kalibriervorgang zu einem erheblichen Zeitverlust führen.

Der vorliegenden Erfindung liegt die Aufgabe zugrunde, ein Kalibrierwerkzeug zu schaffen, welches einfach im Aufbau ist, sowie ein Verfahren zur Anwendung anzugeben, durch das der Kalibriervorgang möglichst unkompliziert und Zeitsparend ablaufen kann.

Die Aufgabe der Erfindung wird durch die Merkmale gemäß Anspruch 1 und durch das Verfahren gemäß Anspruch 8 gelöst.

Erfindungsgemäß ist ein Kalibrierwerkzeug zum Kalibrieren eines in einen Biegestempel einer Abkantpresse integrierten Winkelmesswerkzeuges ausgebildet. Der Biegestempel weist im Zentrum des Radius der Biegekante eine virtuelle Arbeitsebene auf. Das Kalibrierwerkzeug umfasst einen Kalibrierwerkzeugkörper, an welchem in einem Referenzwinkel zueinander stehend eine erste und eine zweite Kalibrierfläche ausgebildet sind, welche symmetrisch um eine zwischen den Kalibrierflächen eingeschlossene Symmetrieebene angeordnet sind. Am Kalibrierwerkzeugkörper ist eine erste Anlagefläche ausgebildet, welche mit einer zur virtuellen Arbeitsebene parallelen Anlagefläche des Biegestempels in Kontakt bringbar ist, wodurch die Lage des Kalibrierwerkzeuges relativ zum Biegestempel definierbar ist, wobei die Kalibrierflächen so am Kalibrierwerkzeugkörper angeordnet sind, dass bei einer Kontaktierung der ersten Anlagefläche mit der Anlagefläche des Biegestempels die zwischen den Kalibrierflächen eingeschlossene Symmetrieebene deckungsgleich mit der virtuellen Arbeitsebene des Biegestempels ist, sodass das Winkelmesswerkzeug mittels der Kalibrierflächen auf den Referenzwinkel kalibrierbar ist.

Von Vorteil an der erfindungsgemäßen Ausbildung ist, dass ein derartiges, einfach aufgebautes, Kalibrierwerkzeug durch die zwei am Kalibrierwerkzeug ausgebildeten Anlageflächen relativ zum Biegestempel gut positioniert werden kann. Dadurch ist eine Kalibrierung des Messwerkzeuges einfach möglich. Von besonderem Vorteil ist hierbei, dass das Kalibrierwerkzeug nicht nur durch eine Manipulationsvorrichtung, sondern auch manuell zum Biegestempel geführt werden kann. Durch die erfindungsgemäße Ausbildung des Kalibrierwerkzeuges wird somit erreicht, dass dieses aufgrund der unkomplizierten und einfachen Handhabung in regelmäßigen und verkürzten Zeitabständen eingesetzt werden kann. Somit wird auch die Prozessqualität des Biegeprozesses und daraus die Produktqualität der gebogenen Blechwerkstücke erhöht. Weiters können durch den einfachen und unkomplizierten Einsatz des Kalibrierwerkzeuges die Rüstzeiten der Biegemaschine verkürzt werden. Insbesondere müssen die im unteren Pressbalken der Abkantpresse eingesetzten Biegewerkzeuge zum Kalibrieren des Winkelmesswerkzeuges nicht neu gerüstet werden, sondern ist es möglich den Kalibriervorgang durchzuführen, während alle Biegewerkzeuge gerüstet sind.

Weiters kann vorgesehen sein, dass der Kalibrierwerkzeugkörper eine, vorzugsweise schwalbenschwanzförmige, Ausnehmung aufweist, durch welche das Kalibrierwerkzeug mittels einer Manipulationsvorrichtung greifbar ist. Von Vorteil ist hierbei, dass das Kalibrierwerkzeug dadurch gut von einer Manipulationsvorrichtung aufgenommen werden kann, wodurch es positionsgenau geführt werden kann.

Ferner kann es zweckmäßig sein, dass der Kalibrierwerkzeugkörper einen gegenüber der ersten Anlagefläche vorstehenden Positioniervorsprung aufweist, welcher mit einer korrespondierenden Ausnehmung im Biegestempel in Eingriff bringbar ist, wobei die Ausnehmung im Biegestempel als nutförmige Vertiefung ausgebildet ist, sodass das Kalibrierwerkzeug in vertikaler Richtung relativ zum Biegestempel verschiebbar ist. Von Vorteil ist hierbei, dass durch diese Merkmale das Kalibrierwerkzeug in einer horizontalen Richtung parallel zur ersten Anlagefläche in dessen Position fixiert ist. Dadurch kann erreicht werden, dass das Kalibrierwerkzeug relativ zum Biegestempel positionsgenau geführt werden kann.

Darüber hinaus kann vorgesehen sein, dass die zweite Anlagefläche des Kalibrierwerkzeugkörpers zwischen den beiden Kalibrierflächen angeordnet ist. Von Vorteil ist hierbei, dass durch diese Maßnahme das Kalibrierwerkzeug an die Ausgestaltung des Biegestempels angepasst werden kann. Dadurch wird die Messsicherheit und Messgenauigkeit des Kalibrierwerkzeuges erhöht, da es an den Biegestempel angepasst ist.

Entsprechend einer Weiterbildung kann vorgesehen sein, dass die erste Anlagefläche, sowie die zweite Anlagefläche und die beiden Kalibrierflächen an der selben Seite des Kalibrierwerkzeugkörpers angeordnet sind, wodurch eine Biegestempelaufnahmeseite ausgebildet ist. Von Vorteil ist hierbei, dass dadurch das Kalibrierwerkzeug unkompliziert zum Biegestempel geführt werden kann. Weiters kann das Kalibrierwerkzeug durch diese Maßnahmen neben einer Positionierung mittels einer Manipulationsvorrichtung auch gut manuell durch den Bediener positioniert werden.

Weiters kann es zweckmäßig sein, dass am Kalibrierwerkzeugkörper eine zweite Anlagefläche ausgebildet ist, welche mit der Arbeitskante des Biegestempels in Kontakt bringbar ist. Von Vorteil ist hierbei, dass durch

Erfindungsgemäß ist weiters Verfahren zum kalibrieren eines in einen Biegestempel einer Biegemaschine, insbesondere Abkantpresse, integrierten Winkelmesswerkzeuges, insbesondere unter Verwendung eines Kalibrierwerkzeuges mit einem Kalibrierwerkzeugkörper nach einem der vorhergehenden Ansprüche angegeben. Im Verfahren wird in einem ersten Verfahrensschritt das Kalibrierwerkzeug zum Biegestempel geführt, sodass eine erste Anlagefläche des Kalibrierwerkzeugkörpers an eine vertikale Anlagefläche des in der Abkantpresse befestigten Biegestempels angedrückt wird. In einem zweiten Verfahrensschritt das Kalibrierwerkzeug in vertikaler Richtung so weit nach oben verschoben wird, bis das Winkelmesswerkzeug die Lage der Kalibrierflächen erfassen kann. In einem dritten Verfahrensschritt wird von einer Maschinensteuerung ein Winkel des Winkelmesswerkzeuges abgelesen, wobei der abgelesene Winkel durch zwei am Kalibrierwerkzeugkörper in einem Referenzwinkel zueinander stehende Kalibrierflächen vorgegeben wird, welche vom Kalibrierwerkzeug kontaktiert werden. In einem vierten Verfahrensschritt wird die Maschinensteuerung kalibriert, sodass der abgelesene Winkel mit dem vorbekannten Referenzwinkel des Kalibrierwerkzeuges übereinstimmt.

Von Vorteil an dem erfindungsgemäßen Verfahren zur Kalibrierung des Winkelmesswerkzeuges ist, dass das erfindungsgemäße Kalibrierwerkzeug durch die zwei am Kalibrierwerkzeug ausgebildeten Anlageflächen relativ zum Biegestempel gut positioniert werden kann. Dadurch ist eine Kalibrierung des Messwerkzeuges einfach möglich. Von besonderem Vorteil ist hierbei, dass das Kalibrierwerkzeug nicht nur durch eine Manipulationsvorrichtung, sondern auch manuell zum Biegestempel geführt werden kann. Durch die erfindungsgemäße Ausbildung des Kalibrierwerkzeuges wird somit erreicht, dass dieses aufgrund der unkomplizierten und einfachen Handhabung in regelmäßigen und verkürzten Zeitabständen eingesetzt werden kann. Somit wird auch die Prozessqualität des Biegeprozesses und daraus die Produktqualität der gebogenen Blechwerkstücke erhöht. Weiters können durch den einfachen und unkomplizierten Einsatz des Kalibrierwerkzeuges die Rüstzeiten der Biegemaschine verkürzt werden.

Ferner kann vorgesehen sein, dass das Kalibrierwerkzeug durch eine Manipulationsvorrichtung bewegt wird, wobei am Kalibrierwerkzeugkörper eine Ausnehmung ausgebildet ist, in welche die Manipulationsvorrichtung eingreifen kann und somit das Kalibrierwerkzeug haltern kann. Von Vorteil ist hierbei, dass das Kalibrierwerkzeug durch die Manipulationsvorrichtung positionsgenau geführt werden kann. Weiters kann durch die Positionierung des Kalibrierwerkzeuges mittels der Manipulationsvorrichtung erreicht werden, dass der Kalibrierprozess vollständig automatisiert ablaufen kann. Dadurch wird einerseits der notwendige Personaleinsatz vermindert und weiters die Prozesssicherheit erhöht.

Weiters kann es zweckmäßig sein, dass im ersten Verfahrensschritt zusätzlich ein vertikal verlaufender Positioniervorsprung des Kalibrierwerkzeugkörpers in eine korrespondierende Ausnehmung des Biegewerkzeuges eingeführt wird, sodass das Kalibrierwerkzeug in seiner Position in Längsrichtung der Biegekante nicht verschoben werden kann. Von Vorteil ist hierbei, dass dadurch das Kalibrierwerkzeug in einer horizontalen Richtung parallel zur ersten Anlagefläche in dessen Position fixiert ist. Dadurch kann erreicht werden, dass das Kalibrierwerkzeug relativ zum Biegestempel positionsgenau geführt werden kann.

Schließlich kann vorgesehen sein, dass vor dem ersten Verfahrensschritt ein oberer Pressbalken, an dem der zu kalibrierende Biegestempel befestigt ist, in eine obere Endposition verfahren wird. Von Vorteil ist hierbei, dass dadurch das Biegewerkzeug mit dem integrierten Winkelmesswerkzeug gut vom Kalibrierwerkzeug erreicht werden kann.

Zum besseren Verständnis der Erfindung wird diese anhand der nachfolgenden Figuren näher erläutert.

Es zeigen jeweils in stark vereinfachter, schematischer Darstellung:
- Fig. 1: eine Seitenansicht eines schematisch dargestellten Aufbaues einer Bearbeitungsanlage;
- Fig. 2: eine Seitenansicht eines exemplarischen Biegewinkelmesssystems;
- Fig. 3: eine Seitenansicht des exemplarischen Biegewinkelmesssystems in einem Zwischenschritt zum Kalibriervorgang;
- Fig. 4: eine Seitenansicht des exemplarischen Biegewinkelmesssystems in einem während des Kalibriervorganges;
- Fig. 5: eine perspektivische Ansicht des exemplarischen Biegewinkelmesssystems während des Kalibriervorganges;
- Fig. 6: eine perspektivische Ansicht des Kalibrierwerkzeuges;
- Fig. 7: eine weitere perspektivische Ansicht des Kalibrierwerkzeuges.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

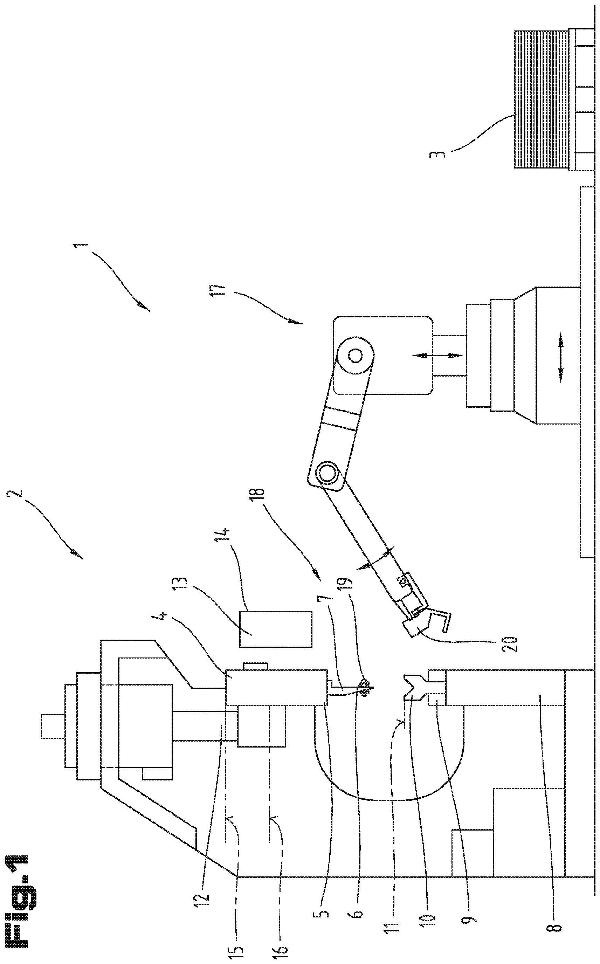

Fig. 1 zeigt in schematischer Darstellung die Seitenansicht einer Bearbeitungsanlage 1. Die Bearbeitungsanlage 1 umfasst eine Abkantpresse 2, welche zum Biegen eines Bleches 3 vorgesehen ist.

Die Abkantpresse 2 umfasst einen ersten verstellbaren Pressbalken 4, in welchem eine erste Werkzeugaufnahme 5 zur Aufnahme eines ersten Biegewerkzeuges 6, beispielsweise eines Biegestempels 7, ausgebildet ist. Weiters umfasst die Abkantpresse 2 einen zweiten feststehenden Pressbalken 8 an welchem eine zweite Werkzeugaufnahme 9 zur Aufnahme eines zweiten Biegewerkzeuges 10 ausgebildet ist. Das zweite Biegewerkzeug 10 ist vorzugsweise als Biegegesenk ausgeführt und korrespondiert mit dem ersten Biegewerkzeug 6.

Das zu biegende Blech 3 wird auf eine Blechauflagefläche 11 des zweiten Biegewerkzeuges 10 aufgelegt. Das erste Biegewerkzeug 6 respektive der erste verstellbare Pressbalken 4 wird durch eine Pressenantriebseinheit 12 in vertikaler Richtung nach oben bzw. nach unten bewegt. Zur Steuerung der Pressenantriebseinheit 12 ist eine Rechnereinheit 13 vorgesehen, welche an eine Eingabe- und/oder Anzeigeeinheit 14 gekoppelt sein kann.

Durch die Pressenantriebseinheit 12 kann der erste Pressbalken 4 zwischen einer oberen Endposition 15 und einer unteren Endposition 16 verstellt werden.

Weiters kann vorgesehen sein, dass die Bearbeitungsanlage 1 eine Manipulationsvorrichtung 17 umfasst, durch welche die zu bearbeitenden Bleche 3 automatisch manipuliert werden können. Alternativ dazu kann auch vorgesehen sein, dass die zu bearbeitenden Bleche 3 manuell in die Abkantpresse 2 eingelegt werden.

Weiters kann, wie in Fig. 1 dargestellt, vorgesehen sein, dass ein Biegewinkelmesssystem 18 ausgebildet ist, welches dazu dient, um während des Biegevorganges den aktuellen Biegewinkel eines Blechwerkstückes 3 zu erfassen um mittels eines Regelkreises einen gewünschten Biegewinkel im Blechwerkstück 3 erzeugen zu können. Das Biegewinkelmesssystem 18 umfasst einen Biegestempel 7 mit einem in den Biegestempel 7 integrierten Winkelmesswerkzeug 19. Das Winkelmesswerkzeug 19 kann beispielsweise in Form von zwei Tastscheiben ausgeführt sein, welche an der Innenkante eines zu biegenden Bleches 3 anliegen. Durch die Formgebung der Tastscheiben werden diese während des Umformvorganges unterschiedlich weit in den Biegestempel 7 eingedrückt, wodurch sich der aktuell vorhandene Biegewinkel am Blechwerkstück 3 errechnen lässt.

Das Biegewinkelmesssystem 18 umfasst weiters ein Kalibrierwerkzeug 20, welches zum kalibrieren des Winkelmesswerkzeuges 19 dient.

Wie in Fig. 1 ersichtlich kann vorgesehen sein, dass das Kalibrierwerkzeug 20 von der Manipulationsvorrichtung 17 gehaltert bzw. bewegt wird. Anstatt der Verwendung einer Manipulationsvorrichtung 17 zur Manipulation des Kalibrierwerkzeuges 20, wie dies in Fig. 1 dargestellt ist, kann auch vorgesehen sein, dass beispielsweise eine nicht dargestellte Hinteranschlageinheit dazu ausgebildet ist, um das Kalibrierwerkzeug 20 manipulieren zu können bzw. den Kalibriervorgang durchführen zu können.

In wieder einer anderen Variante ist es auch denkbar, dass das Kalibrierwerkzeug 20 vom Maschinenbediener geführt wird, wodurch eine Manipulationseinheit zur automatisierten Handhabung des Kalibrierwerkzeuges 20 nicht notwendig ist. Der genaue Ablauf des Kalibriervorganges wird anhand der weitern Figuren bzw. in der dazugehörigen Figurenbeschreibung noch näher erläutert.

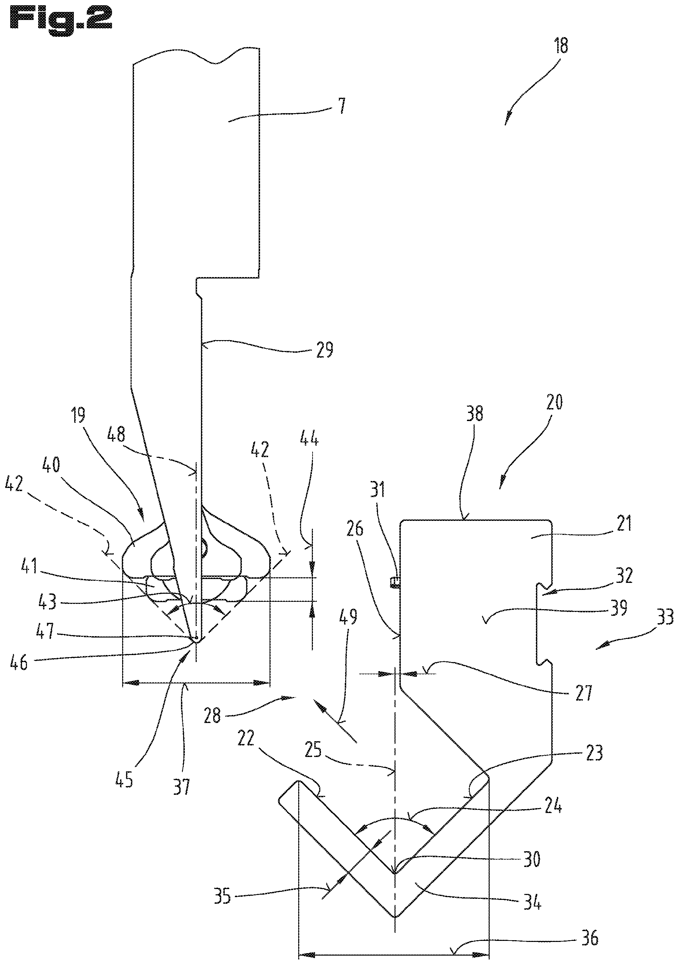

Fig. 2 zeigt die Seitenansicht eines Biegewinkelmesssystems 18, wobei in der gezeigten Darstellung das Kalibrierwerkzeug 20 nicht mit dem Biegestempel 7 respektive dem Winkelmesswerkzeug 19 in Eingriff steht. Aufgrund der in Fig. 2 dargestellten Ansicht können die einzelnen Bauteile des Biegewinkelmesssystems 18 bzw. deren Ausgestaltung gut beschrieben werden.

Das Kalibrierwerkzeug 20 umfasst einen Kalibrierwerkzeugkörper 21, welcher die wesentlichen Funktionsflächen des Kalibrierwerkzeuges 20 aufweist. Am Kalibrierwerkzeugkörper 21 sind eine erste Kalibrierfläche 22 und eine zweite Kalibrierfläche 23 ausgebildet. Die beiden Kalibrierflächen 22, 23 sind in einem Referenzwinkel 24 zueinander angeordnet. Der Referenzwinkel 24 kann je nach zu kalibrierendem Winkelmesswerkzeug 19 verschieden groß ausgeführt werden und ist an das zu kalibrierende Winkelmesswerkzeug angepasst.

In der dargestellten Ausführungsvariante ist ein Referenzwinkel 24 gewählt, welcher 90° beträgt. In weiteren Ausführungsvarianten ist es jedoch auch denkbar, dass der Referenzwinkel 24 vorzugsweise zwischen 20° und 175° ausgeführt wird. Die Wahl der Größe des Referenzwinkels 24 ist von der Ausbildung des Biegestempels 7 abhängig.

Die beiden Kalibrierflächen 22, 23 sind bezüglich einer Symmetrieebene 25 einander gegenüberliegend angeordnet. Mit anderen Worten ausgedrückt wird der Referenzwinkel 24 durch die Symmetrieebene 25 halbiert.

Weiters ist vorgesehen, dass am Kalibrierwerkzeugkörper 21 eine erste Anlagefläche 26 ausgebildet ist, welche parallel zur Symmetrieebene 25 angeordnet ist. Hierbei kann vorgesehen sein, dass die erste Anlagefläche 26 in einem Normalabstand 27 zur Symmetrieebene 25 angeordnet ist. Der Abstand 27 ist an die geometrische Ausgestaltung des Biegestempels 7 angepasst.

Die erste Anlagefläche 26 kann, wie im gezeigten Ausführungsbeispiel dargestellt, als Fläche mit einer flachen Oberfläche ausgeführt sein, welche in den Kalibrierwerkzeugkörper 21 integriert ist. Alternativ zu der Ausbildung in Form einer flachen Oberfläche ist es jedoch auch möglich, dass die erste Anlagefläche 26 beispielsweise durch drei am Kalibrierwerkzeugkörper 21 ausgebildete punktförmige Kontaktauflagen gebildet wird. In einem weiteren Ausführungsbeispiel ist es auch denkbar, dass beispielsweise linienförmige Kontaktauflagen gebildet sind, durch welche eine Ebene aufgespannt wird, die ebenfalls als erste Anlagefläche 26 bezeichnet wird.

Die erste Anlagefläche 26 ist am Kalibrierwerkzeugkörper 21 so angeordnet, dass sie sich an derselben Seite des Kalibrierwerkzeugkörpers 21 befindet, an welcher auch die Kalibrierflächen 22, 23 angeordnet sind. Durch diese Anordnung ergibt sich eine Biegestempelaufnahmeseite 28, in welcher der Biegestempel 7 aufnehmbar ist und so mit dem Kalibrierwerkzeug 20, insbesondere mit den Kalibrierflächen 22, 23 in Kontakt bringbar ist.

Die erste Anlagefläche 26 ist dazu ausgebildet, um während des Kalibriervorganges an eine korrespondierende Anlagefläche 29 des Biegestempels 7 angelegt zu werden und somit die Position bzw. Lage des Kalibrierwerkzeuges 20 zu bestimmen. Wenn die Lage des Kalibrierwerkzeuges 20 relativ zum Biegestempel 7 vorgegeben ist sind die beiden Kalibrierflächen 22, 23 dazu vorgesehen, um während des Kalibriervorganges vom Winkelmesswerkzeug 19 kontaktiert zu werden.

Es kann auch vorgesehen sein, dass am Kalibrierwerkzeugkörper 20 in der Schnittkante der V-Förmig zueinander angeordneten Kalibrierflächen 22, 23 eine zweite Anlagefläche 30 ausgebildet ist, welche ebenfalls zur Kontaktierung mit dem Biegestempel 7 vorgesehen ist.

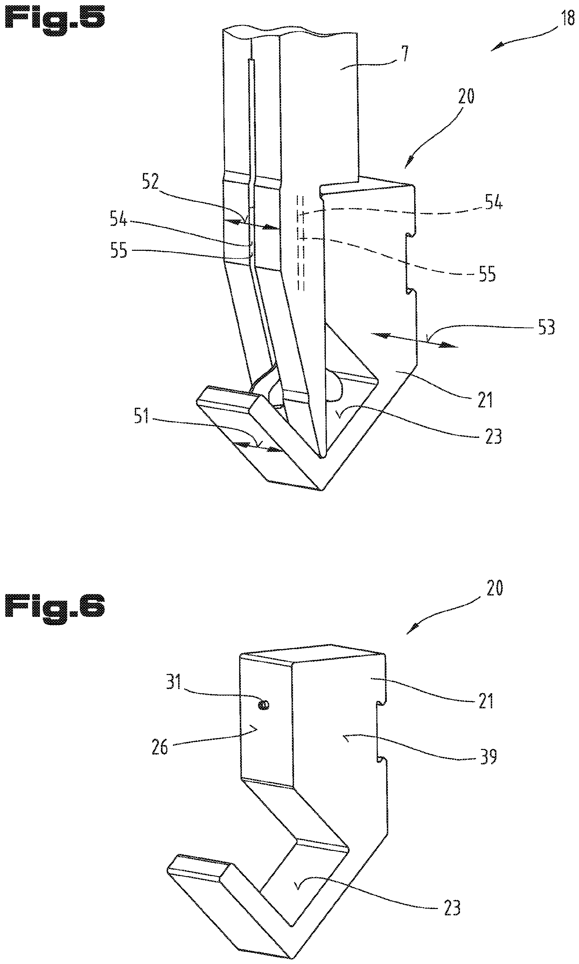

Weiters kann vorgesehen sein, dass das Kalibrierwerkzeug 20 einen Positioniervorsprung 31 umfasst. Verschiedene Ausgestaltungsmöglichkeiten dieses Positioniervorsprunges 31 werden in Fig. 6 bzw. in der Figurenbeschreibung zu Fig. 6 näher erläutert bzw. aufgezeigt.

Weiters kann vorgesehen sein, dass am Kalibrierwerkzeugkörper 21 eine Ausnehmung 32 ausgebildet ist, in welche die Manipulationsvorrichtung 17 eingreifen kann und somit das Kalibrierwerkzeug 20 halten kann. Die Ausgestaltung bzw. Form dieser Ausnehmung 32 ist an die jeweilige verwendete Manipulationsvorrichtung 17 angepasst. Beispielsweise kann, wie in diesem Ausführungsbeispiel ersichtlich, vorgesehen sein, dass die Ausnehmung 32 als Schwalbenschwanzförmige Nut ausgebildet ist. Durch eine derartige Ausbildung der Ausnehmung 32 kann das Kalibrierwerkzeug 20 mit gängigen Manipulationsvorrichtungen 17 gegriffen und bewegt werden. Die Ausnehmung 32 ist vorzugsweise an einer Rückseite 33 des Kalibrierwerkzeugkörpers 21 angeordnet, welche der Biegestempelaufnahmeseite 28 abgewandt ist.

Wie aus Fig. 2 ersichtlich kann vorgesehen sein, dass die beiden Kalibrierflächen 22, 23 als V-förmiger Schenkel 34 ausgebildet sind, welcher eine Wandstärke 35 aufweist.

Die Wandstärke 35 wird vorzugsweise so gewählt, dass der V-förmige Schenkel 34 einerseits möglichst wenig Masse aufweist um das Kalibrierwerkzeug 20 möglichst leicht auszuführen, andererseits muss die Wandstärke 35 ausreichend groß gewählt werden, um dem V-förmigen Schenkel 34 genügend Steifigkeit zu verleihen, damit es während des Kalibriervorganges zu keiner Verformung des V-förmigen Schenkels 34 durch an den Schenkeln auftretende Biegekräfte kommt.

Dadurch dass die Kalibrierflächen 22, 23 V-förmig zueinander angeordnet sind, ergibt sich eine Öffnungsweite 36, innerhalb welcher sich die Kalibrierflächen 22, 23 erstrecken. Diese Öffnungsweite 36 ist vorzugsweise so groß gewählt, dass sie größer ist als eine Breite 37 des Winkelmesswerkzeuges 19. Die Öffnungsweite 36 kann einerseits durch die Länge der V-Förmig zueinander angeordneten Schenkel bestimmt werden. Andererseits ist die Größe der Öffnungsweite 36 vom Referenzwinkel 24 abhängig.

Weiters kann vorgesehen sein, dass eine Deckfläche 38, welche den Kalibrierwerkzeugkörper 21 nach oben hin begrenzt, ebenfalls als Anlagefläche ausgebildet ist. Es kann vorgesehen sein, dass während des Kalibriervorganges die Deckfläche 38 den Biegestempel 7 kontaktiert und somit zur Bestimmung bzw. zur Festlegung der Lage des Kalibrierwerkzeugkörpers 21 relativ zum Biegestempel 7 dient.

Seitlich wird der Kalibrierwerkzeugkörper 21 jeweils durch eine Wandfläche 39 begrenzt.

Anhand Fig. 2 wird in weiterer Folge auch der Biegestempel 7 mit dem integrierten Winkelmesswerkzeug 19 beschrieben. Wie in Fig. 2 ersichtlich, kann vorgesehen sein, dass das Winkelmesswerkzeug 19 eine erste Winkelmessscheibe 40 und eine zweite Winkelmessscheibe 41 umfasst. Wird an die erste Winkelmessscheibe 40 und an die zweite Winkelmessscheibe 41 beidseitig eine Tangente 42 angelegt, so ergibt sich zwischen diesen beiden Tangenten 42 ein Messwinkel 43. Die Tangenten 42 werden während des Biegevorganges durch das zu biegende Blech 3 gebildet. Für den Kalibriervorgang werden die Tangenten 42 durch das Kalibrierwerkzeug 20, insbesondere die Kalibrierflächen 22, 23 des Kalibrierwerkzeugkörpers 21 gebildet.

Bei der Erfassung des Messwinkels 43 kontaktieren beide Winkelmessscheiben 40, 41 das Blech 3, oder im Falle der Kalibrierung die Kalibrierflächen 22, 23. Dadurch ergibt sich eine Horizontalbeabstandung 44, durch welche mittels Winkelfunktionen der der Messwinkel 43 in der Rechnereinheit berechnet werden kann.

Der Biegestempel 7 weist eine Arbeitskante 45 auf, welche während des Biegevorganges zur Anlage am zu biegenden Blech 3 gebracht wird. Aus fertigungstechnischen Gründen ist die Arbeitskante 45 nicht scharfkantig ausgeführt, sondern weist einen Radius 46 auf. Durch ein Zentrum 47 des Radius 46 verläuft eine virtuelle Arbeitsebene 48, entlang welcher während des Biegevorganges die Arbeitskante 45 auf und ab verschoben wird.

In der Darstellung nach Fig. 2 ist der Biegestempel 7 in der Abkantpresse 2 eingespannt. In dieser Lage, welche sich aus der Einspannung des Biegestempels 7 in der Abkantpresse 2 ergibt, ist die virtuelle Arbeitsebene 48, welche dem Biegestempel zugeordnet ist, vertikal angeordnet.

Da die virtuelle Arbeitsebene 48 dem Biegestempel 7 zugeordnet ist, wird bei einer Verdrehung des Biegestempels 7 auch die virtuelle Arbeitsebene 48 mitgedreht.

In weiterer Folge wird nun anhand der Figuren 2 bis 4 ein möglicher Ablauf zu einem Kalibriervorgang beschrieben.

Ein Kalibriervorgang mit dem erfindungsgemäßen Kalibrierwerkzeug 20 kann durchgeführt werden, während sowohl die ersten Biegewerkzeuge 6 als auch die zweiten Biegewerkzeuge 10 an den jeweiligen Werkzeugaufnahmen 5, 9 gerüstet sind. Um den Kalibriervorgang möglichst einfach durchzuführen, kann vorgesehen sein, dass der erste Pressbalken 4 mit dem ersten Biegewerkzeug 6 respektive dem Biegestempel 7 an eine obere Endposition 15 verfahren wird. Dadurch kann erreicht werden, dass der Freiraum zwischen den Biegewerkzeugen 6, 10 möglichst groß ist und somit das Kalibrierwerkzeug 20 möglichst ungehindert zum Biegestempel 7 bewegt werden kann.

In einem ersten Verfahrensschritt des Kalibriervorganges wird das Kalibrierwerkzeug 20 in Bewegungsrichtung 49 Richtung Biegestempel 7 bewegt. Das Kalibrierwerkzeug 20 ist hierbei so orientiert, dass die Biegestempelaufnahmeseite 28 dem Biegestempel 7 zugerichtet ist.

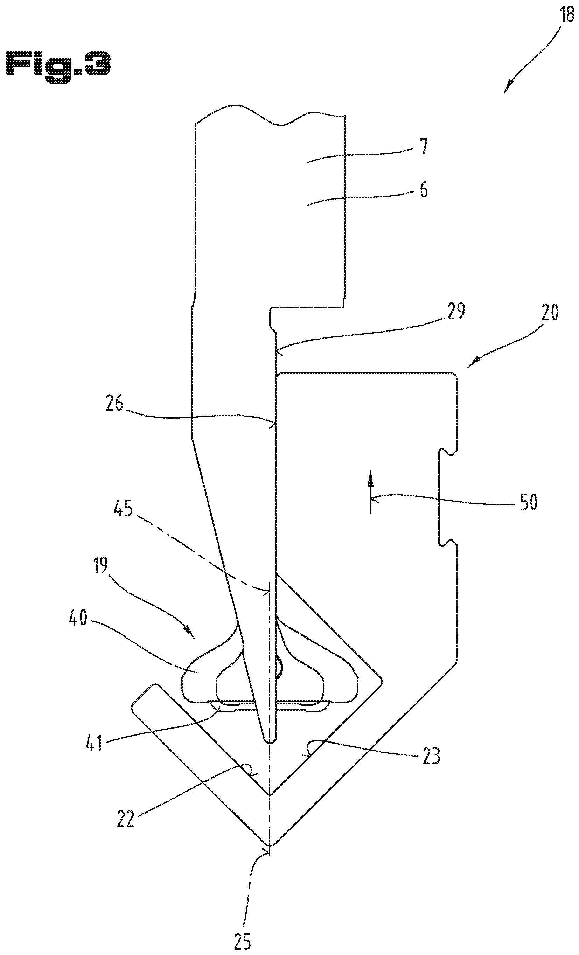

Wie in Fig. 3 ersichtlich wird das Kalibrierwerkzeug 20 so weit in Richtung Biegestempel 7 verschoben, bis die erste Anlagefläche 26 des Kalibrierwerkzeuges 20 die korrespondierende Anlagefläche 29 des Biegestempels 7 berührt. Hierbei wird ein gewisser vordefinierter Druck auf das Kalibrierwerkzeug 20 aufgebracht, sodass die beiden Anlageflächen 26, 29 satt aneinander anliegen. Das Winkelmesswerkzeug 19, insbesondere die erste Winkelmessscheibe 40 bzw. die zweite Winkelmessscheibe 41, liegen hierbei noch nicht an den Kalibrierflächen 22, 23 an.

Bei Verwendung eines Kalibrierwerkzeuges 20, welches dem zu kalibrierenden Biegestempel 7 zugeordnet ist, sind nach dem obig beschriebenen Verfahrensschritt, wie in Fig. 3 ersichtlich, die Symmetrieebene 25 und die virtuelle Arbeitsebene 48 deckungsgleich.

In einem weiteren Verfahrensschritt kann nun das Kalibrierwerkzeug 20 in einer vertikalen Richtung 50 nach oben bewegt werden, bis beide Winkelmessscheiben 40, 41 an den Kalibrierflächen 22, 23 anliegen.

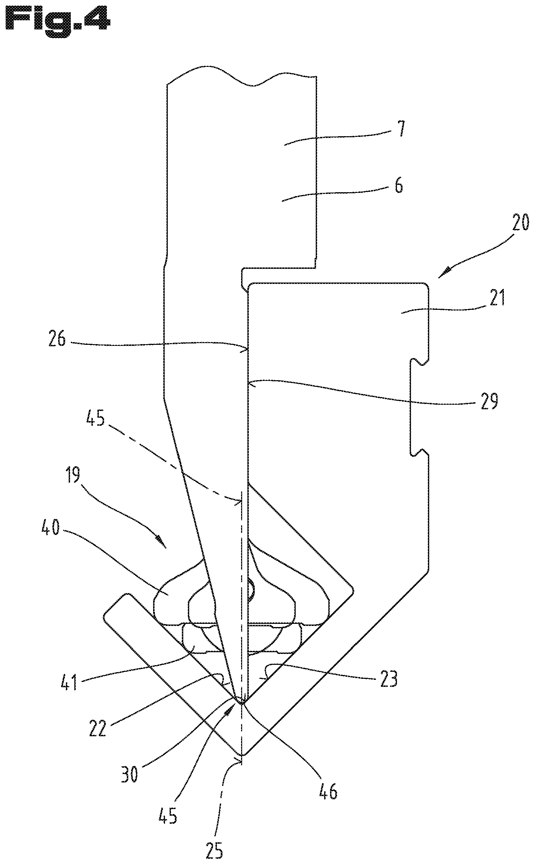

Wenn nun wie in Fig. 4 dargestellt beide Winkelmessscheiben 40, 41 an den Kalibrierflächen 22, 23 anliegen, kann die Verschiebung in vertikaler Richtung 50 gestoppt werden, und der Messwinkel 43 von der Rechnereinheit 13 erfasst werden. In einem weiteren Verfahrensschritt wird der vom Winkelmesswerkzeug 19 erfasste Messwinkel 43 mit dem vorbekannten Referenzwinkel 24 des Kalibrierwerkzeuges 20 verglichen.

Die Rechnereinheit 13 wird nun so kalibriert, dass der erfasste Messwinkel 43 auf den Wert des vorbekannten Referenzwinkels 24 abgeglichen wird.

Für die Kalibrierung des Winkelmesswerkzeuges 19 kann vorgesehen sein, dass wie in Fig. 4 dargestellt, das Kalibrierwerkzeug 20 so weit nach oben verschoben wird, bis die Arbeitskante 45 an den Kalibrierflächen 22, 23 beziehungsweise an der zweiten Anlagefläche 30 anliegt. Dies kann vorteilhaft sein, wenn das Kalibrierwerkzeug 20 vom Maschinenbediener manuell bewegt wird, da durch die Kontaktierung von Arbeitskante 45 und Kalibrierflächen 22, 23 beziehungsweise der zweiten Anlagefläche 30 das Kalibrierwerkzeug 20 in dessen Lage zusätzlich stabilisiert wird.

Wird das Kalibrierwerkzeug 20 jedoch von einer automatisierten Manipulationsvorrichtung 17 bewegt bzw. gehaltert, so kann vorgesehen sein, dass der Kalibriervorgang bereits gestartet werden kann, wenn beide Winkelmessscheiben 40, 41 an den Kalibrierflächen 22, 23 anliegen und die Arbeitskante 45 des Biegestempels 7 noch von der zweiten Anlagefläche 30 beabstandet ist.

Nach dem Kalibriervorgang kann das Kalibrierwerkzeug 20 vom Biegestempel 7 wegbewegt werden, sodass unter Zuhilfenahme des kalibrierten Winkelmesswerkzeuges 19 der Biegevorgang gestartet werden kann.

In dien Fig. 5 und 6 ist das Kalibrierwerkzeug 20 in einer perspektivischen Ansicht dargestellt. In der Fig. 5 ist zusätzlich der Biegestempel 7 dargestellt, wobei die Lage von Biegestempel 7und Kalibrierwerkzeug 20 zueinander gleich wie in der Darstellung gemäß Fig. 4 gewählt wurde.

Wie in Fig. 5 ersichtlich ist eine Breite 51 des Kalibrierwerkzeuges 20 vorzugsweise so gewählt, dass sie kleiner ist als eine Breite 52 des Biegestempels 7. Dadurch kann sichergestellt werden, dass das Kalibrierwerkzeug 20 während des Kalibriervorganges nur am jeweils zu kalibrierenden Biegestempel 7 anliegt und nicht fälschlicherweise an einem weiteren in der Werkzeugaufnahme 5 gespannten Biegestempel 7.

Um eine lagerichtige Positionierung des Kalibrierwerkzeuges 20 in Biegekantenlängsrichtung 53 zu erreichen, kann zusätzlich vorgesehen sein, dass das Kalibrierwerkzeug 20 einen Positioniervorsprung 31 umfasst, welcher mit einer entsprechenden Ausnehmung 54 im Biegestempel 7 in Eingriff bringbar ist. Die Ausnehmung 54 im Biegestempel 7 kann beispielsweise als Nutförmige Vertiefung 55 ausgeführt sein, welche entweder an einer Seite oder an beiden Seiten des Biegestempels 7 integriert ist. Alternativ dazu ist es auch denkbar, dass die Ausnehmung 54 im Biegestempel 7 in Form einer durchgehenden Trennebene gebildet ist.

Der Positioniervorsprung 31, welcher vorzugsweise in die erste Anlagefläche 26 integriert ist, kann beispielsweise in Form eines Positionierstiftes realisiert werden, welcher in einer Ausnehmung in der ersten Anlagefläche 26 eingebracht ist. Alternativ dazu ist es auch denkbar, dass der Positioniervorsprung 31 einteilig mit dem Kalibrierwerkzeugkörper 21 ausgebildet ist. In wieder einer anderen Ausführungsvariante kann vorgesehen sein, dass der Positioniervorsprung 31 im Biegestempel 7 integriert ist und die zugehörige Ausnehmung 54 im Kalibrierwerkzeugkörper 21 integriert ist.

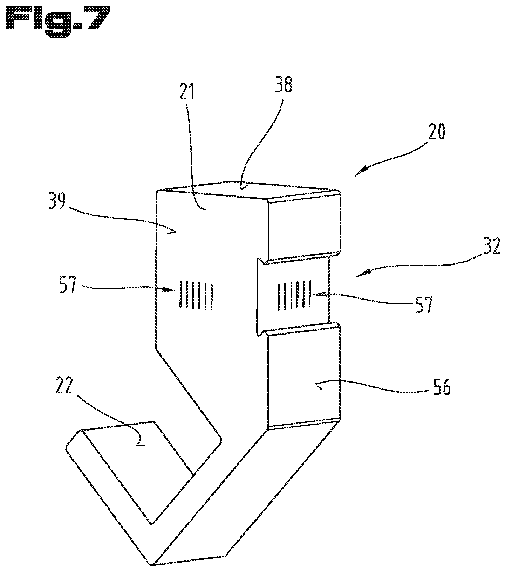

Fig. 7 zeigt eine weitere perspektivische Ansicht des Kalibrierwerkzeuges 20, wobei in dieser Ansicht eine Rückseitige Fläche 56 des Kalibrierwerkzeugkörpers 21 sichtbar ist, in welcher die Ausnehmung 32 zur Aufnahme mittels einer Manipulationsvorrichtung 17 vorgesehen ist.

Wie in Fig. 7 weiters ersichtlich, kann vorgesehen sein, dass am Kalibrierwerkzeug 20 eine Identifizierkennung 57 angebracht ist. Eine derartige Identifizierkennung kann beispielsweise in Form eines Strichcodes ausgeführt sein, welcher am Kalibrierwerkzeugkörper 21 aufgebracht ist. Ein derartiger Strichcode kann etwa durch den Benutzer mittels eines entsprechenden Barscanners erfasst werden. Alternativ dazu kann auch vorgesehen sein, dass der Barscanner in die Manipulationsvorrichtung 17 integriert ist und der Strichcode automatisiert erfasst wird.

In einer Alternativvariante kann vorgesehen sein, dass die Identifizierkennung 57 in Form einer Zahlen- und/oder Ziffernkombination am Kalibrierwerkzeugkörper 21 angebracht ist.

Die Identifizierkennung 57 kann dazu verwendet werden um das Kalibrierwerkzeug 20 zu identifizieren. Insbesondere können geometrische Informationen, wie der Referenzwinkel 24 in der Rechnereinheit 13 hinterlegt sein und durch die Identifizierkennung 57 abgerufen werden.

In den einzelnen Darstellungen der Figuren 2 bis 7 ist eine Ausführungsform des Kalibrierwerkzeuges 20 gezeigt, wobei für gleiche Teile gleiche Bezugszeichen bzw. Bauteilbezeichnungen wie in den jeweils vorangegangenen Figuren verwendet werden. Um unnötige Wiederholungen zu vermeiden, wird auf die detaillierte Beschreibung in den jeweils vorangegangenen Figuren hingewiesen bzw. Bezug genommen.

Die Ausführungsbeispiele zeigen mögliche Ausführungsvarianten des Biegewinkelmesssystems 18, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus der Bearbeitungsanlage 1 diese bzw. deren Bestandteile teilweise unmaßstäblich und/oder vergrößert und/oder verkleinert dargestellt wurden. Die Erfindung ist durch die Ansprüche definiert.

**Bezugszeichenaufstellung**

| | | | |
|---|---|---|---|
| 1 | Bearbeitungsanlage | 31 | Positioniervorsprung |
| 2 | Abkantpresse | 32 | Ausnehmung |
| 3 | Blech | 33 | Rückseite |
| 4 | erster Pressbalken | 34 | Schenkel |
| 5 | erste Werkzeugaufnahme | 35 | Wandstärke |
| 6 | erstes Biegewerkzeug | 36 | Öffnungsweite |
| 7 | Biegestempel | 37 | Breite des Winkelmesswerkzeuges |
| 8 | zweiter Pressbalken | | |
| 9 | zweite Werkzeugaufnahme | 38 | Deckfläche |
| 10 | zweites Biegewerkzeug | 39 | Wandfläche |
| 11 | Blechauflagefläche | 40 | erste Winkelmessscheibe |
| 12 | Pressenantriebseinheit | 41 | zweite Winkelmessscheibe |
| 13 | Rechnereinheit | 42 | Tangente an Winkelmessscheibe |
| 14 | Eingabe- Anzeigeeinheit | 43 | Messwinkel |
| 15 | obere Endposition | 44 | Horizontalbeabstandung |
| 16 | untere Endposition | 45 | Arbeitskante |
| 17 | Manipulationsvorrichtung | 46 | Radius |
| 18 | Biegewinkelmesssystem | 47 | Zentrum |
| 19 | Winkelmesswerkzeug | 48 | virtuelle Arbeitsebene |
| 20 | Kalibrierwerkzeug | 49 | Bewegungsrichtung |
| 21 | Kalibrierwerkzeugkörper | 50 | vertikale Richtung |
| 22 | erste Kalibrierfläche | 51 | Breite Kalibrierwerkzeug |
| 23 | zweite Kalibrierfläche | 52 | Breite Biegestempel |
| 24 | Referenzwinkel | 53 | B iegekantenläng srichtung |
| 25 | Symmetrieebene | 54 | Ausnehmung |
| 26 | erste Anlagefläche | 55 | nutförmige Vertiefung |
| 27 | Abstand | 56 | Rückseitige Fläche |
| 28 | Biegestempelaufnahmeseite | 57 | Identifizierkennung |
| 29 | Anlagefläche | | |
| 30 | zweite Anlagefläche | | |

## Patentansprüche

1. Kalibrierwerkzeug (20) zum Kalibrieren eines Winkelmesswerkzeuges (19), welches in einen Biegestempel (7) einer Abkantpresse (2) integriert ist, welcher Biegestempel (7) eine Arbeitskante (45) mit einem Radius (46) aufweist, in dessen Zentrum (47) eine virtuelle Arbeitsebene (48) definiert ist und welcher Biegestempel (7) eine zur virtuellen Arbeitsebene (48) parallele Anlagefläche (29) aufweist, das Kalibrierwerkzeug (20) umfassend einen Kalibrierwerkzeugkörper (21), an welchem in einem Referenzwinkel (24) zueinander stehend eine erste (22) und eine zweite Kalibrierfläche (23) ausgebildet sind, welche symmetrisch um eine zwischen den Kalibrierflächen (22, 23) eingeschlossene Symmetrieebene (25) angeordnet sind, **dadurch gekennzeichnet, dass** am Kalibrierwerkzeugkörper (21) eine erste Anlagefläche (26) ausgebildet ist, welche mit der zur virtuellen Arbeitsebene (48) parallelen Anlagefläche (29) des Biegestempels (7) in Kontakt bringbar ist, wodurch die Lage des Kalibrierwerkzeuges (20) relativ zum Biegestempel (7) definierbar ist, wobei die Kalibrierflächen (22, 23) so am Kalibrierwerkzeugkörper (21) angeordnet sind, dass bei einer Kontaktierung der ersten Anlagefläche (26) des Kalibrierwerkzeugkörpers (21) mit der Anlagefläche (29) des Biegestempels (7) die zwischen den Kalibrierflächen (22, 23) eingeschlossene Symmetrieebene (25) deckungsgleich mit der virtuellen Arbeitsebene (48) des Biegestempels (7) ist, sodass das Winkelmesswerkzeug (19) mittels der Kalibrierflächen (22, 23) auf den Referenzwinkel (24) kalibrierbar ist.

2. Kalibrierwerkzeug nach Anspruch 1, **dadurch gekennzeichnet, dass** der Kalibrierwerkzeugkörper (21) eine, vorzugsweise schwalbenschwanzförmige, Ausnehmung (32) aufweist, durch welche das Kalibrierwerkzeug (20) mittels einer Manipulationsvorrichtung (17) greifbar ist.

3. Kalibrierwerkzeug nach Anspruch 1 oder 2, **dadurch gekennzeichnet, dass** der Kalibrierwerkzeugkörper (21) einen gegenüber der ersten Anlagefläche (26) vorstehenden Positioniervorsprung (31) aufweist, welcher mit einer korrespondierenden Ausnehmung (54) im Biegestempel (7) in Eingriff bringbar ist, wobei die Ausnehmung (54) im Biegestempel (7) als nutförmige Vertiefung (55) ausgebildet ist, sodass das Kalibrierwerkzeug (20) in vertikaler Richtung (50) relativ zum Biegestempel (7) verschiebbar ist.

4. Kalibrierwerkzeug nach einem der vorhergehenden Ansprüche, **dadurch gekennzeichnet, dass** am Kalibrierwerkzeugkörper (21) eine zweite Anlagefläche (30) ausgebildet ist, welche mit der Arbeitskante (45) des Biegestempels (7) in Kontakt bringbar ist.

5. Kalibrierwerkzeug nach einem der vorhergehenden Ansprüche, **dadurch gekennzeichnet, dass** die zweite Anlagefläche (30) des Kalibrierwerkzeugkörpers (21) zwischen den beiden Kalibrierflächen (22, 23) angeordnet ist.

6. Kalibrierwerkzeug nach einem der vorhergehenden Ansprüche, **dadurch gekennzeichnet, dass** die erste Anlagefläche (26), sowie die zweite Anlagefläche (30) und die beiden Kalibrierflächen (22, 23) an der selben Seite des Kalibrierwerkzeugkörpers (21) angeordnet sind, wodurch eine Biegestempelaufnahmeseite (28) ausgebildet ist.

7. Biegewinkelmesssystem (18) umfassend einen Biegestempel (7) mit einem integrierten Winkelmesswerkzeug (19) und ein Kalibrierwerkzeug (20) zum Kalibrieren des Winkelmesswerkzeuges (19), **dadurch gekennzeichnet, dass** das Kalibrierwerkzeug (20) nach einem der vorhergehenden Ansprüche ausgebildet ist.

8. Verfahren zum Kalibrieren eines in einen Biegestempel (7) einer Abkantpresse (2) integrierten Winkelmesswerkzeuges (19) unter Verwendung eines Kalibrierwerkzeuges (20), insbesondere unter Verwendung eines Kalibrierwerkzeuges (20) nach einem der vorhergehenden Ansprüche, **dadurch gekennzeichnet, dass** in einem ersten Verfahrensschritt das Kalibrierwerkzeug (20) zum Biegestempel (7) geführt wird, sodass eine erste Anlagefläche (26) des Kalibrierwerkzeugkörpers (21) an eine vertikale Anlagefläche (29) des in der Abkantpresse (2) befestigten Biegestempels (7) angedrückt wird; in einem zweiten Verfahrensschritt das Kalibrierwerkzeug (20) in vertikaler Richtung (50) so weit nach oben verschoben wird, bis das Winkelmesswerkzeug (19) die Lage von zwei am Kalibrierwerkzeugkörper (21) in einem Referenzwinkel (24) zueinander stehende Kalibrierflächen (22, 23) erfassen kann;
in einem dritten Verfahrensschritt von einer Rechnereinheit (13) ein angezeigter Winkel des Winkelmesswerkzeuges (19) abgelesen wird, wobei der abgelesene Winkel durch die zwei am Kalibrierwerkzeugkörper (21) in einem Referenzwinkel (24) zueinander stehenden Kalibrierflächen (22, 23) vorgegeben wird, welche vom Kalibrierwerkzeug (20) kontaktiert werden; in einem vierten Verfahrensschritt die Rechnereinheit (13) kalibriert wird, sodass der abgelesene Winkel mit dem vorbekannten Referenzwinkel (24) des Kalibrierwerkzeuges (20) übereinstimmt.

9. Verfahren nach Anspruch 8, **dadurch gekennzeichnet, dass** das Kalibrierwerkzeug (20) durch einen Manipulationsvorrichtung (17) bewegt wird, wobei am Kalibrierwerkzeugkörper (21) eine Ausnehmung (32) ausgebildet ist, in welche die Manipulationsvorrichtung (17) eingreifen kann und somit das Kalibrierwerkzeug (20) haltern kann.

10. Verfahren nach Anspruch 8 oder 9, **dadurch gekennzeichnet, dass** im ersten Verfahrensschritt zusätzlich ein vertikal verlaufender Positioniervorsprung (31) des Kalibrierwerkzeugkörpers (21) in eine korrespondierende Ausnehmung (54) des Biegestempels (7) eingeführt wird, sodass das Kalibrierwerkzeug (20) in seiner Position in Längsrichtung der Biegekante nicht verschoben werden kann.

11. Verfahren nach einem der Ansprüche 8 bis 10, **dadurch gekennzeichnet, dass** vor dem ersten Verfahrensschritt ein erster, verstellbarer, Pressbalken (4), an dem der zu kalibrierende Biegestempel (7) befestigt ist, in eine obere Endposition (15) verfahren wird.

## Claims

1. A calibrating tool (20) for calibrating an angle-measuring tool (19) which is integrated in a bending die (7) of a press brake (2), which bending die (7) has a working edge (45) with a radius (46), in the centre (47) whereof a virtual working plane (48) is defined and which bending die (7) has a bearing face (29) parallel to the virtual working plane (48), the calibrating tool (20) comprising a calibrating tool body (21) on which a first (22) and a second calibrating face (23) are configured standing at a reference angle (24) to one another, which calibrating faces are arranged symmetrically about a plane of symmetry (25) contained between the calibrating faces (22,23), **characterized in that** a first bearing face (26) is formed on the calibrating tool body (21), which bearing face can be brought into contact with the bearing face (29) of the bending die (7) parallel to the virtual working plane (48), as a result of which the position of the calibrating tool (20) relative to the bending die (7) can be defined, wherein the calibrating faces (22, 23) are arranged on the calibrating tool body (21) in such a manner that when the first bearing face (26) of the calibrating tool body (21) comes into contact with the bearing face (29) of the bending die (7), the plane of symmetry (25) contained between the calibrating faces (22, 23) is congruent with the virtual working plane (48) of the bending die (7), so that the angle measuring tool (19) can be calibrated by means of the calibrating faces (22, 23) with the reference angle (24).

2. The calibrating tool according to claim 1, **characterized in that** the calibrating tool body (21) has a preferably dovetail-shaped recess (32) through which the calibrating tool (20) can be gripped by means of a manipulating device (17).

3. The calibrating tool according to claim 1 or 2, **characterized in that** the calibrating tool body (21) has a positioning projection (31) which protrudes in respect of the first bearing face (26) and which can be brought into engagement with a corresponding recess (54) in the bending die (7), wherein the recess (54) is configured in the bending die (7) as a groove-shaped depression (55), so that the calibrating tool (20) can be displaced in the vertical direction (50) relative to the bending die (7).

4. The calibrating tool according to one of the preceding claims, **characterized in that** a second bearing face (30) is formed on the calibrating tool body (21) which can be brought into contact with the working edge (45) of the bending die (7).

5. The calibrating tool according to one of the preceding claims, **characterized in that** the second bearing face (30) of the calibrating tool body (21) is arranged between the two calibrating faces (22, 23).

6. The calibrating tool according to one of the preceding claims, **characterized in that** the first bearing face (26) and also the second bearing face (30) and the two calibrating faces (22, 23) are arranged on the same side of the calibrating tool body (21), as a result of which a bending die receiving side (28) is formed.

7. A bending angle measuring system (18) comprising a bending die (7) with an integrated angle measuring tool (19) and a calibrating tool (20) for calibrating the angle measuring tool (19), **characterized in that** the calibrating tool (20) is configured according to one of the preceding claims.

8. A method of calibrating an angle measuring tool (19) integrated in a bending die (7) of a press brake (2) using a calibrating tool (20), in particular using a calibrating tool (20) according to one of the preceding claims, **characterized in that** in a first process step the calibrating tool (20) is guided to the bending die (7), so that a first bearing face (26) of the calibrating tool body (21) is pressed onto a vertical bearing face (29) of the bending die (7) secured in the press brake (2);
in a second process step, the calibrating tool (20) is displaced upwards in a vertical direction (50) until the angle measuring tool (19) is able to detect the position of two calibrating faces (22, 23) standing on the calibrating tool body (21) at a reference angle (24) to one another;
in a third process step of a computer unit (13) a displayed angle of the angle measuring tool (19) is read off, wherein the angle which is read off is specified by the two calibrating faces (22, 23) standing at a reference angle (24) to one another on the calibrating tool body (21), which are in contact with the calibrating tool (20);
in a fourth process step, the computer unit (13) is calibrated, so that the angle which is read off agrees with the aforementioned reference angle (24) of the calibrating tool (20).

9. The method according to claim 8, **characterized in that** the calibrating tool (20) is moved by a manipulation device (17), wherein a recess (32) is formed on the calibrating tool body (21), with which the manipulation device (17) can engage and can therefore hold the calibrating tool (20).

10. The method according to claim 8 or 9, **characterized in that** in the first process step a vertically running positioning projection (31) of the calibrating tool body (21) is introduced in addition into a corresponding recess (54) in the bending die (7), so that the calibrating tool (20) cannot be displaced in its position in the longitudinal direction of the bending edge.

11. The method according to one of claims 8 to 10, **characterized in that** before the first process step, a first adjustable jacking beam (4) to which the bending die (7) to be calibrated is secured is moved into an upper end position (15).

## Revendications

1. Outil de calibrage (20) pour le calibrage d'un outil de mesure d'angle (19), qui est intégré dans une matrice de pliage (7) d'une presse plieuse (2), cette matrice de pliage (7) comprenant une arête de travail (45) avec un rayon (46), au centre (47) duquel est défini un plan de travail virtuel (48) et cette matrice de pliage (7) comprenant une surface d'appui (29) parallèle au plan de travail virtuel (48), l'outil de calibrage (20) comprenant un corps d'outil de calibrage (21), sur lequel sont réalisées, avec un angle de référence (24) entre eux, une première (22) et une deuxième surface de calibrage (23), qui sont disposées de manière symétrique autour d'un plan de symétrie (25) inclus entre les surfaces de calibrage (22, 23), **caractérisé en ce que**, sur le corps de l'outil de calibrage (21) est réalisée une première surface d'appui (26), qui peut être mise en contact avec la surface d'appui (29), parallèle au plan de travail virtuel (48), de la matrice de pliage (7) ce qui permet de définir la position de l'outil de calibrage (20) par rapport à la matrice de pliage (7), les surfaces de calibrage (22, 23) étant disposées sur le corps de l'outil de calibrage (21) de façon à ce que, lors d'un contact de la première surface d'appui (26) du corps de l'outil de calibrage (21) avec la surface d'appui (29) de la matrice de pliage (7), le plan de symétrie (25) inclus entre les surfaces de calibrage (22, 23) correspond avec le plan de travail virtuel (48) de la matrice de pliage (7), de façon à ce que l'outil de mesure d'angle (19) puisse être calibré au moyen des surfaces de calibrage (22, 23) sur l'angle de référence (24).

2. Outil de calibrage selon la revendication 1, **caractérisé en ce que** le corps de l'outil de calibrage (21) comprend un évidement (32), de préférence en forme de queue d'aronde, grâce auquel l'outil de calibrage (20) peut être saisi au moyen d'un dispositif de manipulation (17).

3. Outil de calibrage selon la revendication 1 ou 2, **caractérisé en ce que** le corps de l'outil de calibrage (21) comprend une saillie de positionnement (31) dépassant par rapport à la première surface d'appui (26), qui peut être emboîté avec un évidement (54) correspondant dans la matrice de pliage (7), l'évidement (54) étant réalisé dans la matrice de pliage (7) comme une cavité en forme de rainure (55), de façon à ce que l'outil de calibrage (20) puisse être déplacé dans la direction verticale (50) par rapport à la matrice de pliage (7).

4. Outil de calibrage selon l'une des revendications précédentes, **caractérisé en ce que**, sur le corps de l'outil de calibrage (21), une deuxième surface d'appui (30) est réalisée, qui peut être mise en contact avec l'arête de travail (45) de la matrice de pliage (7).

5. Outil de calibrage selon l'une des revendications précédentes, **caractérisé en ce que** la deuxième surface d'appui (30) du corps de l'outil de calibrage (21) est disposée entre les deux surfaces de calibrage (22, 23).

6. Outil de calibrage selon l'une des revendications précédentes, **caractérisé en ce que** la première surface d'appui (26), ainsi que la deuxième surface d'appui (30) et les deux surfaces de calibrage (22, 23) sont disposées sur le même côté du corps de l'outil de calibrage (21), ce qui permet de réaliser un côté de logement de matrice de pliage (28).

7. Système de mesure d'angle de pliage (18) comprenant une matrice de pliage (7) avec un outil de mesure d'angle (19) et un outil de calibrage (20) pour le calibrage de l'outil de mesure d'angle (19), **caractérisé en ce que** l'outil de calibrage (20) est conçu selon l'une des revendications précédentes.

8. Procédé pour le calibrage d'un outil de mesure d'angle (19) intégré dans une matrice de pliage (7) d'une presse plieuse (2), à l'aide d'un outil de calibrage (20), plus particulièrement à l'aide d'un outil de calibrage (20) selon l'une des revendications précédentes, **caractérisé en ce que**,
dans la première étape de procédé, l'outil de calibrage (20) est guidé vers la matrice de pliage (7), de façon à ce qu'une première surface d'appui (26) du corps de l'outil de calibrage (21) soit pressée contre une surface d'appui verticale (29) de la matrice de pliage (7) fixée dans la presse plieuse (2) ;
dans une deuxième étape de procédé, l'outil de calibrage (20) est déplacé vers le haut en direction verticale (50) jusqu'à ce que l'outil de mesure d'angle (19) puisse détecter la position de deux surfaces de calibrage (22, 23) disposées sur le corps de l'outil de calibrage (21) avec un angle de référence (24) entre elles ;
dans une troisième étape e procédé, une unité de calcul (13) lit un angle affiché de l'outil de mesure d'angle (19), l'angle lu étant prédéterminé par les deux surfaces de calibrage (22, 23) disposées sur le corps de l'outil de calibrage (21) avec un angle de référence (24) entre elles, qui est mise en contact avec l'outil de calibrage (20) ;
dans une quatrième étape de procédé, l'unité de calcul (13) est calibrée de façon à ce que l'angle lu coïncide avec l'angle de référence (24) préalablement connu de l'outil de calibrage (20).

9. Procédé selon la revendication 8, **caractérisé en ce que** l'outil de calibrage (20) est déplacé par un dispositif de manipulation (17), un évidement (32) étant réalisé sur le corps de l'outil de calibrage (21), dans lequel le dispositif de manipulation (17) peut s'emboîter et donc peut maintenir l'outil de calibrage (20).

10. Procédé selon la revendication 8 ou 9, **caractérisé en ce que** dans la première étape de procédé, une saillie de positionnement verticale (31) du corps de l'outil de calibrage (21) est introduite dans un évidement (54) correspondant de la matrice de pliage (7), de façon à ce que l'outil de calibrage (20) ne puisse pas être déplacé dans sa position dans la direction longitudinale de l'arête de pliage.

11. Procédé selon l'une des revendications 8 à 10, **caractérisé en ce que**, avant la première étape de procédé, une première barre de presse (4) réglable, à laquelle la matrice de pliage (7) à calibrer est fixée, est déplacée vers une position finale supérieure (15).
